# EUROPEAN PATENT SPECIFICATION

(11) **EP 4 374 591 B1**
(45) Date of publication and mention of the grant of the patent: **09.09.2026**
(21) Application number: 21746439.5
(22) Date of filing: 19.07.2021
(51) Int. Cl.: H04W 4/80, H04W 84/12

(54) **A METHOD FOR MANAGING INTERNET CONNECTION OF AN APPLIANCE**
VERFAHREN ZUR VERWALTUNG DER INTERNETVERBINDUNG EINES GERÄTS
PROCÉDÉ DE GESTION DE CONNEXION INTERNET D'UN APPAREIL

(43) Date of publication of application: 29.05.2024
(73) Proprietor: ELECTROLUX APPLIANCES AKTIEBOLAG, 105 45 Stockholm (SE)
(72) Inventor: FISHER, James, Charlotte, NC 28262 (US); BENSKIN, Jason, 10545 Stockholm (SE); HAKIM, Vivek, Charlotte, NC 28262 (US); TAIARIOL, Mauro, 33080 Porcia PN (IT); BOATTO, Filippo, 33080 Porcia PN (IT)
(74) Representative: Electrolux Group Patents
(86) International application number: PCT/EP2021/070071
(87) International publication number: WO 2023/001352

(56) References cited:
- KR-A- 20200 117 147
- KR-A- 20200 117 155

## Description

### Field of the invention

The solution according to embodiments of the present invention generally relates to the appliance field. More specifically, the solution according to embodiments of the present invention relates to a method for managing internet connection of an appliance.

### Background of the invention

A modem appliance (for domestic or professional use) is usually equipped with communication hardware configured to interface with the internet in order to be able to communicate with a remote entity, such as a server.

For example, the server may belong to a cloud computing system configured to implement a service environment adapted to provide service functions for improving the functionality of the appliance. For instance, the appliance may receive from the service environment new firmware updates and additional configurations.

The communication hardware of the appliance may comprise a communication unit configured to establish communication with the internet (and therefore with the server) through an internet access point, for example set-up by a router device.

In order to access the internet access point set-up by the router device, a wireless communication link (*e.g.,* a Wi-Fi link) has to be established between the appliance and the router device. For this reason, the appliance has to be properly configured, with the provision of corresponding wireless credentials.

The configuration of the appliance, and particularly the provision of the wireless credentials to the latter for establishing the wireless communication link between the appliance and the router device, may be carried out by exploiting a mobile device (such as a smartphone).

For this reason, data communication between the mobile device and the appliance has to be enabled by establishing a wireless communication link between the appliance and the mobile device.

According to a solution known in the art, the wireless communication link between the appliance and the mobile device is a Wi-Fi link between the Wi-Fi communication unit of the mobile device and a Wi-Fi access point set-up by the communication hardware of the appliance. The document KR 2020 0117155, 14th October 2020 (2020-10-14), describes a method to connect multiple IoT devices to a Wi-Fi AP using Bluetooth. The document KR 2020 0117147, 14th October 2020 (2020-10-14), outlines a method and apparatus to connect multiple IoT devices to a Wi-Fi AP using Bluetooth.

### Summary of the Invention

The Applicant has found that the known solutions for connecting an appliance to a remote entity, such as a server, are affected by drawbacks.

The known solutions provide for having a user of the appliance connect a mobile device to the appliance through a dedicated Wi-Fi link. The operations required to configure the communication hardware of the appliance and of the mobile device for establishing said dedicated Wi-Fi are not easy, and a user not accustomed to configure network devices may incur into obstacles preventing the correct outcome of the operations.

Moreover, the known solutions lacks of flexibility, since according to the known solutions the connection between the mobile device and the appliance is entirely based on a single communication technology (the Wi-Fi technology).

Furthermore, another serious drawback affecting the known solutions being entirely based on the Wi-Fi technology is that when a user is trying to establish communication between the appliance and the mobile device, if the mobile device was connected to the internet access point set-up by the router through a previously established Wi-Fi link, said Wi-Fi link has to be temporarily disabled, forcing a temporary interruption of said connection between the mobile device and the internet access point.

In view of the above, the Applicant has devised a method for connecting an appliance to a remote entity which is not affected by the abovementioned drawbacks.

An aspect of the present invention relates to a method for connecting an appliance to an external server connected to the internet.

The invention is defined by the independent claims. Further embodiments are described by the dependent claims.

### Brief description of the annexed drawings

These and other features and advantages of the present invention will be made apparent by the following description of some exemplary and non limitative embodiments thereof; for its better intelligibility, the following description should be read making reference to the attached drawings, wherein:
**Figure 1** illustrates an exemplary system according to embodiments of the present invention;
**Figures 2A, 2B** depict the main phases of a method for connecting the appliance to the external server **of the system of** **Figure 1** according to an embodiment of the present invention.

### Detailed description of preferred embodiments of the invention

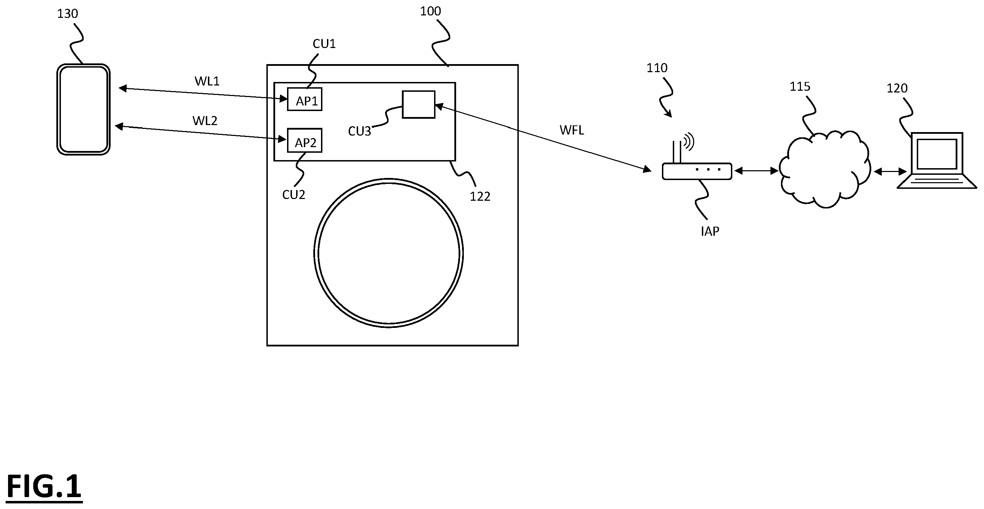

**Figure 1** illustrates an exemplary system according to embodiments of the present invention.

The system according to an embodiment of the present invention comprises an appliance **100,** such as an appliance for domestic use or an appliance for professional use.

In the illustrated example, the appliance **100** is a laundry machine, such as a laundry washing machine configured to wash laundry, a laundry dryer machine configured to dry laundry, or a combined laundry washing and drying machine configured to wash and dry laundry. However, the concepts of the present invention directly apply to other kinds of appliances, both for domestic and professional use, such as for example refrigerators, dishwashers, cooking hobs, ovens.

The system according to an embodiment of the present invention further comprises a router device **110** configured to set-up an internet access point **IAP** for allowing communication with an external network, such as the internet **115.**

Making for example reference to a domestic scenario, wherein the appliance **100** is a domestic appliance located inside a home, the internet access point **IAP** set-up by the router device **110** may be an access point (also) used by other appliances and electronic devices (*e.g.*, smartphones, television sets, personal computers) located in the home for accessing the internet **115.**

According to an embodiment of the present invention, the appliance **100** is configured to exchange data with an (external) server **120** connected to the internet **115.** For example, the server **120** may be configured to implement a service environment *SE* (*e.g.,* managed by the manufacturer of the appliance **100**) adapted to provide service functions for improving the functionality of the appliance **100.** For instance, exploiting the service environment SE, the appliance **100** may receive new firmware updates and additional configurations. It is pointed out that while in the considered example the service environment SE is implemented by a single unit, *i.e.,* the server **120,** similar considerations if the service environment is implemented by a distributed system, such as a cloud computing system distributed over a plurality of servers.

According to an embodiment of the present invention, the appliance **100** comprises a network communication module **122** configured to allow data communication between the appliance **100** and external entities connected to the internet **115** (such as the external server **120**) through the internet access point **IAP** set-up by the router device **110.** For this purpose, according to an embodiment of the present invention, the network communication module **122** is configured to set-up a Wi-Fi link **WFL** between the appliance **100** and the internet access point **IAP.**

In order to allow the set-up of the Wi-Fi link **WFL** and to access the internet access point **IAP,** the appliance **100** requires to be properly configured with the provision of corresponding wireless credentials *WC, e.g.,* comprising a SSID (Service Set IDentifier) and a password.

According to an embodiment of the present invention, the configuration of the appliance **100** is carried out through a mobile device **130,** such as a smartphone.

According to an embodiment of the present invention, the mobile device **130** is configured to manage the operations for the configuration of the appliance **100** exploiting a corresponding service application *APP* that may be installed in the mobile device **130.** For example, the service application *APP* may be an application which is (also) configured to allow interaction with the service environment *SE* implemented by the server **120.** For instance, the service application *APP* may be managed by the same entity that manages the service environment *SE.*

According to an embodiment of the present invention, the configuration of the appliance **100** through the mobile device **130** provides that a direct data communication is enabled between the appliance **100** and the mobile device **130.**

For this purpose, according to an embodiment of the present invention, the appliance **100** is configured to set-up:
- a first access point **AP1** for allowing wireless communication with the appliance **100** using the Wi-Fi technology, and
- a second access point **AP2** for allowing wireless communication with the appliance **100** using a wireless technology different from the Wi-Fi technology.

According to an embodiment of the invention, said wireless technology different from the Wi-Fi technology comprises one among Bluetooth technology, Near-Field communication technology, Radio sub Giga technology, ZigBee technology, and optical communication technology.

According to an embodiment of the present invention, a direct data communication is enabled between the mobile device **130** and the appliance **100** by having the mobile device **130** accessing a selected one between the two access points **AP1, AP2.**

In this way, according to an embodiment of the present invention, a wireless link is established between the mobile device **130** and a selected one between the access point **AP1** and the access point **AP2,** and particularly a wireless link **WL1** between the mobile device **130** and the access point **AP1** or a wireless link **WL2** between the mobile device **130** and the access point **AP2.**

It is pointed out that according to an embodiment of the present invention, the appliance **100** is configured to have both the access points **AP1** and **AP2** be concurrently active, so that the mobile device **130** is granted the possibility of a double choice for accessing the appliance **100.**

Thanks to the proposed solution, in which two different and concurrent access points **AP1, AP2** are enabled, each one configured to enable a data communication with the appliance **100** with a different wireless communication technology, the data communication between the mobile device **130** and the appliance **100** required for the configuration of the latter during the connection to the server **120** may be set-up with a higher flexibility.

Moreover, if the mobile device **130** connects to the appliance **100** through the wireless link **WL2** (*i.e.,* using a wireless technology different from the Wi-Fi technology), there is no need to temporarily disable possible already established Wi-Fi data connections of the mobile device **130** with other communication devices, such as the router device **110,** since the wireless link **WL2** does not involve the use of the Wi-Fi communication module (not illustrated) of the mobile device **130.**

According to an embodiment of the present invention, the access points **AP1** and **AP2** are set-up by the network communication module **122.**

According to an embodiment of the present invention, the network communication module **122** comprises a first wireless communication unit **CU1** configured to be activated to set-up the first access point **AP1.** According to an embodiment of the present invention, the first wireless communication unit **CU1** is a Wi-Fi communication unit.

According to an embodiment of the present invention, the network communication module **122** further comprises a second wireless communication unit **CU2** configured to be activated to set-up the second access point **AP2.** According to an embodiment of the present invention, the second wireless communication unit **CU2** is a Bluetooth communication unit, a Near-Field communication unit, a Radio sub Giga communication unit, a ZigBee communication unit, or an optical communication unit.

According to an embodiment of the present invention, the network communication module **122** further comprises a third wireless communication unit **CU3** configured to be activated to establish the Wi-Fi link **WFL** between the appliance **100** and the internet access point **IAP.**

According to an embodiment of the present invention, once a selected wireless link **WL1** or **WL2** has been established between the mobile device **130** and the appliance **100,** said selected wireless link is exploited by the mobile device **130** for providing the appliance **100** with the wireless credentials WC for accessing the internet access point **IAP.** For example, the provision of the wireless credentials *WC* over the selected wireless link **WL1** or **WL2** may be carried out by the mobile device **130** under the control of the service application *APP* installed thereat.

According to an embodiment of the present invention, the appliance **100** is configured to connect to the internet access point **IAP** through the Wi-Fi link **WFL** by exploiting the received wireless credentials *WC.*

Once the appliance **100** is able to access the internet **115** through the internet access point **IAP,** a data connection with the external server **120** can be established. In this way, the appliance **100** is able to interact with the service environment *SE* implemented by the server **120** for availing itself of the services offered by the service environment *SE.* For example, a user of the service application *APP* (*e.g.,* the owner of the appliance **100**) having a personal user account with the service environment *SE* may register the appliance **100** with the service environment *SE* so as to bind the appliance **100** with his/her personal user account. In this way, the appliance **100** may benefit from customized services provided by the service environment *SE,* such as for example new firmware updates and/or additional configurations specifically tailored for the appliance **100.**

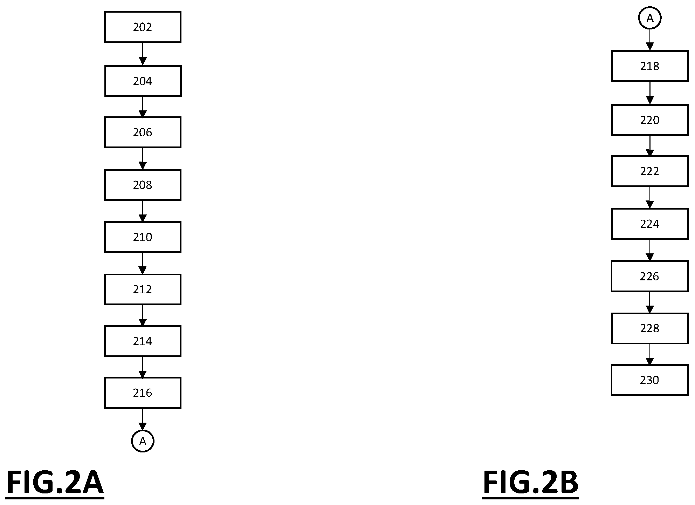

By making reference to **Figures 2A-2B****,** the main phases of a method for connecting the appliance **100** to the external server **120** according to an embodiment of the present invention are illustrated in terms of functional blocks.

The method according to an embodiment of the present invention starts with the appliance **100** that activates both the first wireless communication unit **CU1** and the second wireless communication unit **CU2** of the network interface unit **122** to set-up both the first access point **AP1** and the second access point **AP2** (block **202**).

Then, according to an embodiment of the present invention, the two activated access points **AP1** and **AP2** advertise themselves, by having the first wireless communication unit **CU1** and the second wireless communication unit **CU2** enable broadcast of corresponding access information *AI1, AI2,* respectively (block **204**).

According to an embodiment of the present invention, the access information *AI1* broadcasted by the first wireless communication unit **CU1** is a not-hidden and not-encrypted Wi-Fi SSID. According to a preferred embodiment of the present invention, said Wi-Fi SSID comprises a first name univocally identifying the appliance **100.** According to an embodiment of the present invention, said access information *AI1* comprises a unique string in a predefined format comprising at least one among an identifier of the type of the appliance **100,** a MAC address of the appliance **100,** a PNC-ELC of the appliance **100,** a serial number of the appliance **100.**

According to an embodiment of the present invention, the access information *AI2* broadcasted by the second wireless communication unit **CU2** is an identifier message (depending on the wireless communication technology implemented by the second wireless communication unit **CU2,** such as for example a Bluetooth message in case of Bluetooth technology), preferably comprising a first name univocally identifying the appliance **100.** According to an embodiment of the present invention, said access information *AI2* comprises a unique string in a predefined format comprising at least one among an identifier of the type of the appliance **100,** a MAC address of the appliance **100,** a PNC-ELC of the appliance **100,** a serial number of the appliance **100.**

According to an embodiment of the present invention, said access information *AI1* and said access information *AI2* comprise a same identifier univocally identifying the appliance **100.**

According to an embodiment of the present invention, the mobile device **130** receives the access information *AI1* and *AI2,* and preferably displays information about the availability of the two activated access points **AP1** and **AP2** to the user of the mobile device **130** (block **206**). Preferably this information is provided through the service application *APP.*

It is pointed out that in order to being able to receive both the two access information *AI1* and *AI2,* the mobile device **130** requires that corresponding wireless communication hardware modules thereof are enabled. More particularly, in order to receive the access information *AI1,* a Wi-Fi communication module (not illustrated) of the mobile device **130** has to be enabled. In order to receive the access information *AI2,* a wireless communication module (not illustrated) operating according to the technology of the second wireless communication unit **CU2** has to be enabled. For example, if the second wireless communication unit **CU2** is a Bluetooth communication unit, the mobile device **130** is able to receive the access information *AI2* only if the Bluetooth communication unit of the mobile device **130** is enabled.

According to an embodiment of the present invention, the mobile device **130** selects one between the available activated access points **AP1** and **AP2** and connects to it by collecting and exploiting a corresponding access information between the access information *AI1* and *AI2*, thus setting-up a wireless link (the wireless link **WL1** or the wireless link **WL2**) between the mobile device **130** and the appliance **100** (block **208**). Preferably, the selection of the access point and the activation of the corresponding wireless link is managed by the service application *APP* itself, relieving the user from carrying out laborious and time consuming operations. Alternatively, the selection of the access point and the activation of the corresponding wireless link may be carried out by the mobile device **130** under the direct control of the user.

At this point, data communication between the mobile device **130** and the appliance **100** is enabled through the wireless link **WL1** or **WL2** that has been set-up.

According to an embodiment of the present invention, once an access point **AP1** or **AP2** is selected, and the corresponding wireless link **WL1** or **WL2** is set-up, the communication unit **CU2** or **CU1** having set-up the other (*e.g*., unselected) access point **AP2** or **AP1** is deactivated (block **210**).

At this point, according to an embodiment of the present invention, the network communication unit **122** of the appliance **100** exploits the wireless link **WL1** or **WL2** that has been set-up for sending to the mobile device **130** a list of Wi-Fi internet access points (including the internet access point **IAP** set-up by the router device **110**) seen by the network communication unit **122** (block **212**).

According to an embodiment of the present invention, the mobile device **130** displays the available Wi-Fi internet access points (including the internet access point **IAP** set-up by the router device **110**) seen by the network communication unit **122** by using the list received from the network communication unit **122** of the appliance **100** (block **214**)**.**

At this point, according to an embodiment of the present invention, and preferably using the service application *APP,* the user of the mobile device **130** may select the internet access point **IAP** and cause a sending of the wireless credentials *WC, e.g.,* SSID and password, for accessing the internet access point **IAP** from the mobile device **130** to the appliance **100** over the wireless link **WL1** or **WL2** that has been set-up (block **216**).

Then, according to an embodiment of the present invention, the network communication unit **122** of the appliance **100** connects to the internet access point **IAP** by activating the third communication unit **CU3** and using the received wireless credentials WC, so that a Wi-Fi link **WFL** is set-up between the appliance **100** and the internet access point **IAP** (block **218**). In this way, the appliance **100** is now able to access the internet **115.**

According to a preferred embodiment of the present invention, the received wireless credentials *WC* are advantageously stored by the appliance **100** (block **220**) for being used for future connections to the internet access point **IAP.**

According to an embodiment of the present invention, and preferably using the service application *APP,* the mobile device **130** provides the appliance **100** with a specific pointer *PT* to the server **120,** exploiting the wireless link **WL1** or **WL2** that has been set-up (block **222**).

According to an embodiment of the present invention, the network communication unit **122** of the appliance **100** uses the received pointer *PT* to determine an internet address of the server **120** and request (through the internet **115**) server access information *SAI* (*e.g.,* a security key) for accessing the server **120** to a web portal associated to the service environment *SE* (block **224**).

According to an embodiment of the present invention, the network communication unit **122** of the appliance **100** receives (through the internet **115**) the requested server access information *SAI* from the web portal (block **226**)b**.**

According to an embodiment of the present invention, the network communication unit **122** of the appliance **100** connects to the server **120** (through the internet **115**) exploiting said received server access information *SAI* and, for example, one or more among a MAC address of the appliance **100,** a PNC-ELC of the appliance **100,** and a serial number of the appliance **100** (block **228**).

Then, according to an embodiment of the present invention, and preferably through the service application *APP,* the mobile device **130** requests to turn off the wireless link **WL1** or **WL2** that has been set-up, causing the deactivation of both the first and second communication units **CU1** and **CU2** (block **230**).

Now, the appliance **100** is connected to the server **120,** and data communication between the appliance **100** and the server **120** is enabled. In this way, the appliance **100** is able to interact with the service environment *SE* implemented by the server **120.**

For example, the user may register the appliance **100** with the service environment *SE* through the service application *APP* by binding the appliance **100** with his/her personal user account exploiting:
- an identifier of the appliance **100** (*e.g*., comprising one or more among a MAC address of the appliance **100,** a PNC-ELC of the appliance **100,** and a serial number of the appliance **100**), and
- appliance purchase information data (*e.g.,* the purchase date of the appliance **100**).

Once the appliance **100** is registered with the service environment *SE,* the appliance **100** may benefit from customized services provided by the service environment *SE,* such as for example receiving from the server **120** new firmware updates and/or additional configurations specifically tailored for the appliance **100.**

Naturally, in order to satisfy local and specific requirements, a person skilled in the art may apply to the solution described above many logical and/or physical modifications and alterations. More specifically, although the present invention has been described with a certain degree of particularity with reference to preferred embodiments thereof, it should be understood that various omissions, substitutions and changes in the form and details as well as other embodiments are possible. In particular, different embodiments of the invention may even be practiced without the specific details set forth in the preceding description for providing a more thorough understanding thereof; on the contrary, well-known features may have been omitted or simplified in order not to encumber the description with unnecessary details. Moreover, it is expressly intended that specific elements and/or method steps described in connection with any disclosed embodiment of the invention may be incorporated in other embodiments.

## Claims

1. A method for connecting an appliance **(100)** to an external server **(120)** connected to the internet, comprising:
- setting-up, with a first wireless communication unit (CU1) of the appliance, a first appliance access point **(AP1)** for allowing wireless communication with the appliance using a first wireless technology and, with a second wireless communication unit (CU2) of the appliance, a second appliance access point **(AP2)** for allowing wireless communication with the appliance using a second wireless technology, said first wireless technology comprising Wi-Fi technology, and said second wireless technology being different from said first wireless technology;
- broadcasting, with the first wireless communication unit (**CU1**), first access information for accessing the first appliance access point;
- broadcasting, with the second wireless communication unit **(CU2),** second access information for accessing the second appliance access point;
- setting-up a wireless link **(WL1; WL2)** between a mobile device **(130)** and a selected appliance access point between said first and said second appliance access points **(AP1; AP2);**
- receiving, with the appliance, from the mobile device, and via said wireless link **(WL1; WL2)** credentials for allowing wireless communication between the appliance **(100)** and an internet access point **(IAP);**
- connecting the appliance (100), to the internet access point **(IAP)** exploiting said credentials; and
- connecting the appliance (100), to the external server **(120)** through said internet access point **(IAP).**

2. The method of claim 1, wherein said second wireless technology comprises one among:
- Bluetooth technology;
- Near-Field Communication technology;
- Radio sub Giga technology;
- ZigBee technology;
- optical communication technology.

3. The method of any of the preceding claims, wherein the first wireless communication unit **(CU1)** is configured to be activated to set-up said first appliance access point **(AP1)** and the second wireless communication unit **(CU2)** is configured to be activated to set-up said second appliance access point **(AP2),** the method further comprising:
- activating, with the appliance **(100),** the first wireless communication unit (**CU1**) and the second wireless communication unit **(CU2).**

4. The method of claim 3, further comprising:
- after setting-up of the wireless link between the mobile device **(130)** and said selected appliance access point **(AP1; AP2),** deactivating, with the appliance, a wireless communication unit between the first wireless communication unit **(CU1)** and the second wireless communication unit **(CU2)** that is different from the wireless communication unit configured to set-up the selected appliance access point.

5. The method of claim 3 or 4, wherein the appliance **(100)** further comprises a third wireless communication unit **(CU3),** wherein connecting the appliance **(100)** to the internet access point **(IAP)** comprises activating said third wireless communication unit **(CU3)** to establish a Wi-Fi link **(WFL)** between the appliance and the internet access point.

6. The method of any of claims 3 to 5, further comprising:
- deactivating, with the appliance (100), both the first wireless communication unit and the second wireless communication unit after the appliance is connected to the internet access point **(IAP).**

7. The method of any of claims 3 to 6, wherein setting-up a wireless link between the mobile device **(130)** and a selected appliance access point **(AP1; AP2)** between said first and said second appliance access points comprises:
- the mobile device **(130)** collecting a selected access information between said broadcasted first and second access information; and
- the mobile device **(130)** accessing said selected access point **(AP1; AP2)** exploiting the selected access information.

8. The method of any of claims 3 to 7, wherein:
- said first access information comprises a first name identifying said first appliance access point **(AP1);** and
- said second access information comprises a second name identifying said second appliance access point **(AP2).**

9. The method of claim 8, wherein each of said first access information and said second access information further comprise a same identifier univocally identifying the appliance **(100).**

10. The method of claim 9, wherein said identifier comprises a MAC address associated to the appliance **(100).**

11. The method of any of the preceding claims, wherein said internet access point **(IAP)** is set-up by a router device **(110)** external to the appliance.

12. An appliance comprising at least a first wireless communication unit **(CU1)** and a second wireless communication unit **(CU2),** the appliance being configured to connect to an external server according to the method of claim 1, wherein the first wireless communication unit is configured to be activated to set-up said first appliance access point **(AP1)** and the second wireless communication unit **(CU2)** is configured to be activated to set-up said second access point **(AP2).**

## Patentansprüche

1. Verfahren zum Verbinden eines Geräts (100) mit einem externen Server (120), der mit dem Internet verbunden ist, das Folgendes umfasst:
- Einrichten, mit einer ersten Drahtloskommunikationseinheit (CU1) des Geräts, eines ersten Gerätezugangspunkts (AP1) zum Ermöglichen einer Drahtloskommunikation mit dem Gerät unter Verwendung einer ersten Drahtlostechnologie und, mit einer zweiten Drahtloskommunikationseinheit (CU2) des Geräts, eines zweiten Gerätezugangspunkts (AP2) zum Ermöglichen einer Drahtloskommunikation mit dem Gerät unter Verwendung einer zweiten Drahtlostechnologie, wobei die erste Drahtlostechnologie Wi-Fi-Technologie umfasst und die zweite Drahtlostechnologie von der ersten Drahtlostechnologie verschieden ist;
- Rundsenden, mit der ersten Drahtloskommunikationseinheit (CU1), von ersten Zugriffsinformationen zum Zugreifen auf den ersten Gerätezugangspunkt;
- Rundsenden, mit der zweiten Drahtloskommunikationseinheit (CU2), von zweiten Zugriffsinformationen zum Zugreifen auf den zweiten Gerätezugangspunkt;
- Einrichten einer Drahtlosverbindung (WL1; WL2) zwischen einer Mobilvorrichtung (130) und einem ausgewählten Gerätezugangspunkt zwischen dem ersten und dem zweiten Gerätezugangspunkt (AP1; AP2);
- Empfangen, mit dem Gerät, von der Mobilvorrichtung und über die Drahtlosverbindung (WL1; WL2) von Anmeldeinformationen zum Ermöglichen einer Drahtloskommunikation zwischen dem Gerät (100) und einem Internetzugangspunkt (IAP);
- Verbinden des Geräts (100) mit dem Internetzugangspunkt (IAP), der die Anmeldeinformationen ausnutzt; und
- Verbinden des Geräts (100) mit dem externen Server (120) über den Internetzugangspunkt (IAP).

2. Verfahren nach Anspruch 1, wobei die zweite Drahtlostechnologie eine der Folgenden umfasst:
- Bluetooth-Technologie;
- Kommunikationstechnologie im Nahbereich;
- Radio-Sub-Giga-Technologie;
- ZigBee-Technologie;
- Optische Kommunikationstechnologie.

3. Verfahren nach einem der vorhergehenden Ansprüche, wobei die erste Drahtloskommunikationseinheit (CU1) dazu konfiguriert ist, aktiviert zu werden, um den ersten Gerätezugangspunkt (AP1) einzurichten, und die zweite Drahtloskommunikationseinheit (CU2) dazu konfiguriert ist, aktiviert zu werden, um den zweiten Gerätezugangspunkt (AP2) einzurichten, wobei das Verfahren ferner Folgendes umfasst:
- Aktivieren der ersten Drahtloskommunikationseinheit (CU1) und der zweiten Drahtloskommunikationseinheit (CU2) mit dem Gerät (100).

4. Verfahren nach Anspruch 3, das ferner Folgendes umfasst:
- Nach dem Einrichten der Drahtlosverbindung zwischen der Mobilvorrichtung (130) und dem ausgewählten Gerätezugangspunkt (AP1; AP2) Deaktivieren, mit dem Gerät, einer Drahtloskommunikationseinheit zwischen der ersten Drahtloskommunikationseinheit (CU1) und der zweiten Drahtloskommunikationseinheit (CU2), die sich von der Drahtloskommunikationseinheit unterscheidet, die dazu konfiguriert ist, den ausgewählten Gerätezugangspunkt einzurichten.

5. Verfahren nach Anspruch 3 oder 4, wobei das Gerät (100) ferner eine dritte Drahtloskommunikationseinheit (CU3) umfasst, wobei das Verbinden des Geräts (100) mit dem Internetzugangspunkt (IAP) das Aktivieren der dritten Drahtloskommunikationseinheit (CU3) umfasst, um eine Wi-Fi-Verbindung (WFL) zwischen dem Gerät und dem Internetzugangspunkt herzustellen.

6. Verfahren nach einem der Ansprüche 3 bis 5, das ferner Folgendes umfasst:
- Deaktivieren, mit dem Gerät (100), sowohl der ersten Drahtloskommunikationseinheit als auch der zweiten Drahtloskommunikationseinheit, nachdem das Gerät mit dem Internetzugangspunkt (IAP) verbunden ist.

7. Verfahren nach einem der Ansprüche 3 bis 6, wobei das Einrichten einer Drahtlosverbindung zwischen der Mobilvorrichtung (130) und einem ausgewählten Gerätezugangspunkt (AP1; AP2) zwischen dem ersten und dem zweiten Gerätezugangspunkt Folgendes umfasst:
- die Mobilvorrichtung (130) sammelt eine ausgewählte Zugriffsinformation zwischen der rundgesendeten ersten und zweiten Zugriffsinformation; und
- die Mobilvorrichtung (130), die auf den ausgewählten Zugangspunkt (AP1; AP2) zugreift und die ausgewählten Zugangsinformationen ausnutzt.

8. Verfahren nach einem der Ansprüche 3 bis 7, wobei:
- die ersten Zugriffsinformationen einen ersten Namen umfassen, der den ersten Gerätezugangspunkt (AP1) identifiziert; und
- die zweiten Zugriffsinformationen einen zweiten Namen umfassen, der den zweiten Gerätezugangspunkt (AP2) identifiziert.

9. Verfahren nach Anspruch 8, wobei jede der ersten Zugriffsinformationen und der zweiten Zugriffsinformationen ferner eine gleiche Kennung umfasst, die das Gerät eindeutig identifiziert (100).

10. Verfahren nach Anspruch 9, wobei die Kennung eine MAC-Adresse umfasst, die mit dem Gerät assoziiert ist (100).

11. Verfahren nach einem der vorhergehenden Ansprüche, wobei der Internetzugangspunkt (IAP) durch eine Routervorrichtung (110) außerhalb des Geräts eingerichtet wird.

12. Gerät, das mindestens eine erste Drahtloskommunikationseinheit (CU1) und eine zweite Drahtloskommunikationseinheit (CU2) umfasst, wobei das Gerät dazu konfiguriert ist, sich mit einem externen Server gemäß dem Verfahren nach Anspruch 1 zu verbinden, wobei die erste Drahtloskommunikationseinheit dazu konfiguriert ist, aktiviert zu werden, um den ersten Gerätezugangspunkt (AP1) einzurichten, und die zweite Drahtloskommunikationseinheit (CU2) dazu konfiguriert ist, aktiviert zu werden, um den zweiten Zugangspunkt (AP2) einzurichten.

## Revendications

1. Procédé de connexion d'un appareil (100) à un serveur externe (120) connecté à Internet, comprenant :
- l'établissement, avec une première unité de communication sans fil (CU1) de l'appareil, d'un premier point d'accès (AP1) d'appareil pour permettre une communication sans fil avec l'appareil à l'aide d'une première technologie sans fil et, avec une deuxième unité de communication sans fil (CU2) de l'appareil, d'un deuxième point d'accès (AP2) d'appareil pour permettre une communication sans fil avec l'appareil à l'aide d'une deuxième technologie sans fil, ladite première technologie sans fil comprenant la technologie Wi-Fi et ladite deuxième technologie sans fil étant différente de ladite première technologie sans fil ;
- la diffusion, avec la première unité de communication sans fil (CU1), de premières informations d'accès servant à accéder au premier point d'accès d'appareil ;
- la diffusion, avec la deuxième unité de communication sans fil (CU2), de deuxièmes informations d'accès servant à accéder au deuxième point d'accès d'appareil ;
- l'établissement d'une liaison sans fil (WL1 ; WL2) entre un dispositif mobile (130) et un point d'accès d'appareil sélectionné entre lesdits premier et deuxième points d'accès (AP1 ; AP2) d'appareil ;
- la réception, avec l'appareil, en provenance du dispositif mobile et via ladite liaison sans fil (WL1 ; WL2), de justificatifs pour permettre la communication sans fil entre l'appareil (100) et un point d'accès Internet (IAP) ;
- la connexion de l'appareil (100) au point d'accès Internet (IAP) exploitant lesdits justificatifs ; et
- la connexion de l'appareil (100) au serveur externe (120) par l'intermédiaire dudit point d'accès Internet (IAP).

2. Procédé selon la revendication 1, ladite deuxième technologie sans fil comprenant une technologie parmi :
- la technologie Bluetooth ;
- une technologie de communication en champ proche ;
- la technologie Radio Sub Giga ;
- la technologie ZigBee ;
- une technologie de communication optique.

3. Procédé selon l'une quelconque des revendications précédentes, la première unité de communication sans fil (CU1) étant configurée pour être activée afin d'établir ledit premier point d'accès (AP1) d'appareil et la deuxième unité de communication sans fil (CU2) étant configurée pour être activée afin d'établir ledit deuxième point d'accès (AP2) d'appareil, le procédé comprenant en outre :
- l'activation, avec l'appareil (100), de la première unité de communication sans fil (CU1) et de la deuxième unité de communication sans fil (CU2).

4. Procédé selon la revendication 3, comprenant en outre :
- après l'établissement de la liaison sans fil entre le dispositif mobile (130) et ledit point d'accès (AP1 ; AP2) d'appareil sélectionné, la désactivation, avec l'appareil, d'une unité de communication sans fil entre la première unité de communication sans fil (CU1) et la deuxième unité de communication sans fil (CU2) différente de l'unité de communication sans fil configurée pour l'établissement du point d'accès d'appareil sélectionné.

5. Procédé selon la revendication 3 ou 4, l'appareil (100) comprenant en outre une troisième unité de communication sans fil (CU3), la connexion de l'appareil (100) au point d'accès Internet (IAP) comprenant l'activation de ladite troisième unité de communication sans fil (CU3) pour établir une liaison Wi-Fi (WFL) entre l'appareil et le point d'accès Internet.

6. Procédé selon l'une quelconque des revendications 3 à 5, comprenant en outre :
- la désactivation, avec l'appareil (100), à la fois de la première unité de communication sans fil et de la deuxième unité de communication sans fil après que l'appareil a été connecté au point d'accès Internet (IAP).

7. Procédé selon l'une quelconque des revendications 3 à 6, l'établissement d'une liaison sans fil entre le dispositif mobile (130) et un point d'accès (AP1 ; AP2) d'appareil sélectionné entre lesdits premier et deuxième points d'accès d'appareil comprenant :
- la collecte par le dispositif mobile (130) d'informations d'accès sélectionnées entre lesdites premières et deuxièmes informations d'accès diffusées ; et
- l'accès du dispositif mobile (130) audit point d'accès (AP1 ; AP2) sélectionné exploitant les informations d'accès sélectionnées.

8. Procédé selon l'une quelconque des revendications 3 à 7 :
- lesdites premières informations d'accès comprenant un premier nom identifiant ledit premier point d'accès (AP1) d'appareil ; et
- lesdites deuxièmes informations d'accès comprenant un deuxième nom identifiant ledit deuxième point d'accès (AP2) d'appareil.

9. Procédé selon la revendication 8, chacune desdites premières informations d'accès et desdites deuxièmes informations d'accès comprenant en outre un même identifiant qui identifie de manière univoque l'appareil (100).

10. Procédé selon la revendication 9, ledit identifiant comprenant une adresse MAC associée à l'appareil (100).

11. Procédé selon l'une quelconque des revendications précédentes, ledit point d'accès Internet (IAP) étant établi par un dispositif routeur (110) externe à l'appareil.

12. Appareil comprenant au moins une première unité de communication sans fil (CU1) et une deuxième unité de communication sans fil (CU2), l'appareil étant configuré pour se connecter à un serveur externe selon le procédé de la revendication 1, la première unité de communication sans fil étant configurée pour être activée afin d'établir ledit premier point d'accès (AP1) d'appareil et la deuxième unité de communication sans fil (CU2) étant configurée pour être activée afin d'établir ledit deuxième point d'accès (AP2).
